# FASCICULE DE BREVET EUROPEEN

(11) **EP 3 663 111 B1**
(45) Date de publication et mention de la délivrance du brevet: **10.11.2021**
(21) Numéro de dépôt: 19213809.7
(22) Date de dépôt: 05.12.2019
(51) Int. Cl.: B60D 1/36, B60D 1/62, B62D 59/00, G01S 19/42, G08G 1/00, B62D 59/04, G01S 5/00, G01S 19/18, B62D 53/12

(54) **ENSEMBLE ROULANT COMPORTANT UN ENGIN TRACTEUR, AU MOINS UNE REMORQUE ET UN SYSTÈME D'ATTELAGE AUTOMATIQUE DE LA REMORQUE SUR L'ENGIN TRACTEUR**
FAHRZEUGGRUPPE UMFASSEND EIN ZUGFAHRZEUG, ZUMINDEST EIN ANHÄNGER UND EIN SYSTEM ZUR AUTOMATISCHEN KOPPELUNG DES ANHÄNGERS AN DAS ZUGFAHRZEUG
ROLLING ASSEMBLY COMPRISING A TOWING VEHICLE, AT LEAST ONE TRAILER AND A SYSTEM FOR AUTOMATICALLY COUPLING THE TRAILER TO THE TOWING VEHICLE

(30) Priorité: 05.12.2018 FR 1872342
(43) Date de publication de la demande: 10.06.2020
(73) Titulaire: Arquus, 78000 Versailles (FR)
(72) Inventeur: DELOUMEAU, François, 75015 PARIS (FR)
(74) Mandataire: Lavoix

(56) Documents cités:
- EP-A1- 3 165 061
- WO-A1-2018/162030
- WO-A1-2018/162031
- FR-A1- 3 044 136
- US-A1- 2009 211 823

## Description

La présente invention concerne un ensemble roulant comportant un engin tracteur, au moins une remorque et un système d'attelage automatique de la remorque sur l'engin tracteur.

Le document WO 2018/162030 A1 divulgue une combinaison de véhicule longs comprenant un véhicule de tête et deux véhicules suiveurs attelés par des systèmes de couplage. Ces systèmes de couplage sont prévus pour être attelés ou désattelés en fonction de la route sur laquelle la combinaison de véhicules roule. Le système divulgué ne permet pas de rapprocher les véhicules suiveurs du véhicule de tête lorsque ce dernier est éloigné des véhicules suiveurs.

Dans le cadre de missions effectuées par les engins militaires, le matériel embarqué, nécessaires à assurer l'autonomie d'une mission, impacte très fortement le dimensionnement de l'engin. Les interventions actuelles, notamment dans les zones désertiques, nécessitent d'assurer l'engagement des engins dans la durée, ce qui impose d'embarquer une quantité conséquente de matériel.

Ces engins concernent tous véhicules militaires de combat, tactiques, voire logistiques destinés à transporter du personnel, du fret, des systèmes de communications, d'armes, d'observations, ces véhicules étant conduits, télé-opérés ou intégrés dans un convoi autonome, ou totalement autonomes.

Bien que la composition du matériel à embarquer varie très fortement en fonction des missions à accomplir, l'engin doit, dans tous les cas, être capable d'embarquer la quantité maximale de matériel. Le matériel nécessaire à assurer l'autonomie d'un engin en mission pour une longue durée nécessite des capacités d'emport conséquentes. Bien que ces missions ne représentent que 20% des cas d'emplois, les engins sont jusqu'à présent dimensionnés pour embarquer la totalité de ce matériel.

Il en résulte un surdimensionnement des engins qui impacte fortement leur mobilité, leur coût de possession et leur empreinte logistique. Dans le cadre d'interventions, ce surdimensionnement peut entrainer des répercussions graves sur la réussite de la mission et sur la sécurité des équipages.

De plus, cette contrainte d'emport est antinomique avec la recherche d'engins de plus en plus compacts, manoeuvrables et furtifs. Tel est notamment le cas pour des engins prévus pour une application militaire sur un théâtre d'opérations qui peut être situé dans des zones désertiques, difficiles d'accès ou dont l'accompagnement logistique est réduit à son strict minimum.

C'est à ces problèmes qu'entend plus particulièrement remédier l'invention, en proposant un nouvel ensemble roulant qui permet un emport de matériel en quantité et volume suffisants pour assurer une mission dans la durée, sans gêner les manoeuvres de l'engin en cours d'opération.

A cet effet, l'invention concerne un ensemble roulant comportant un engin tracteur, au moins une remorque et un système d'attelage automatique de la remorque sur l'engin tracteur. L'engin tracteur est équipé d'une première cellule de géolocalisation et d'un premier dispositif de communication à distance et la remorque est équipée d'une deuxième cellule de géolocalisation, d'un deuxième dispositif de communication à distance, d'organes de direction et de freinage et d'au moins un moteur d'entrainement d'au moins une roue de la remorque. L'ensemble roulant comprend au moins une unité logique de calcul de trajectoire de rapprochement entre l'engin tracteur et la remorque, en fonction de coordonnées de géolocalisation déterminées par les première et deuxième cellules de géolocalisation et transmises par les premier et/ou deuxième dispositifs de communication. La remorque est également équipée d'une unité de commande des organes de direction et de freinage et du moteur d'entrainement, en fonction de la trajectoire de rapprochement calculée par l'unité logique.

Grâce à l'invention, l'engin tracteur, notamment tout matériel militaire pouvant se déplacer sur le terrain et susceptible de tracter un système additionnel, est associé à la remorque qui est destinée transporter le matériel de support à l'engagement pour la réalisation de missions dans la durée. A titre d'exemples non limitatifs, l'engin est par exemple un véhicule blindé de combat d'infanterie, couramment appelé VBCI, un véhicule de l'avant blindé, couramment appelé VAB, ou un véhicule de type Jaguar ou Griffon commercialisé par la demanderesse. La remorque est destinée à être chargée de tout le matériel nécessaire pour assurer l'autonomie de l'engin lors de ses missions. Elle permet de soulager l'engin tracteur en volume, dimensions et charge d'emport afin de lui procurer plus de maniabilité que dans le cas d'un engin monocorps. En ce sens, la remorque peut être qualifiée « d'engin d'allègement au contact ».

La remorque est attelable et dételable sans intervention humaine extérieure grâce au système d'attelage automatique, notamment dans le cadre d'un théâtre d'opérations militaires. Le personnel embarqué n'est donc pas sollicité ni exposé pour une opération de largage et d'attelage de la remorque. Le système d'attelage automatique comprend une pièce mâle et une pièce femelle.

La remorque est capable de suivre une trajectoire de rapprochement calculée par l'unité logique comprise dans l'ensemble roulant, sans l'intervention d'un pilote qui dirige la remorque. Celle-ci se déplace alors en étant pilotée à l'aide de l'unité de commande du moteur d'entraînement et des organes de direction et de freinage.

Selon des aspects avantageux mais non obligatoires de l'invention, un tel ensemble roulant peut incorporer une ou plusieurs des caractéristiques suivantes, prises selon toute combinaison techniquement admissible :
- Le moteur d'entrainement de la remorque est de type électrique et la remorque est équipée d'une batterie, de préférence rechargeable, pour l'alimentation du moteur électrique.
- La remorque est équipée de plusieurs moteurs électriques entrainant des roues ou intégrés à des roues de la remorque, avec lesquelles ils forment des moteurs-roues.
- Les roues ou les moteurs-roues constituent les organes de direction de la remorque.
- Les moteurs entrainant les roues ou les moteurs-roues de la remorque sont décrabotables.
- Les premier et deuxième dispositifs de communication à distance intègrent des émetteurs et récepteurs radios.
- Les première et deuxième cellules de géolocalisation fonctionnent sur la base de données GPS ou selon des données issues d'un système d'informations du champ de bataille.
- L'unité logique est disposée sur l'engin tracteur.
- En variante, l'unité logique est disposée sur la remorque.
- L'ensemble roulant comprend au moins deux remorques attelées entre elles, les remorques étant chacune équipées d'une deuxième cellule de géolocalisation, d'un deuxième dispositif de communication à distance, d'organes de direction et de freinage, d'au moins un moteur d'entrainement d'au moins une roue de chaque remorque et d'une unité de commande des organes de direction et de freinage et du moteur d'entrainement en fonction de la trajectoire de rapprochement calculée par l'unité logique.

L'invention sera mieux comprise et d'autres avantages de celle-ci apparaîtront plus clairement à la lumière de la description qui va suivre, de différents modes de réalisation d'un ensemble roulant conforme à son principe, donnée uniquement à titre d'exemple et faite en référence aux dessins annexés dans lesquels :
- [Fig 1] la figure 1 est une figure schématique représentant un ensemble roulant conforme à un premier mode de réalisation de l'invention, comprenant un engin tracteur et une remorque attelée à l'engin tracteur via le système d'attelage automatique dans une première configuration;
- [Fig 2] la figure 2 est une représentation schématique de l'ensemble roulant de la figure 1 dans une deuxième configuration où la remorque suit un itinéraire pour rejoindre le l'engin tracteur ;
- [Fig 3] la figure 3 représente un ensemble roulant conforme à un deuxième mode de réalisation de l'invention qui comprend un engin tracteur et deux remorques attelées entre elles et à cet engin tracteur.

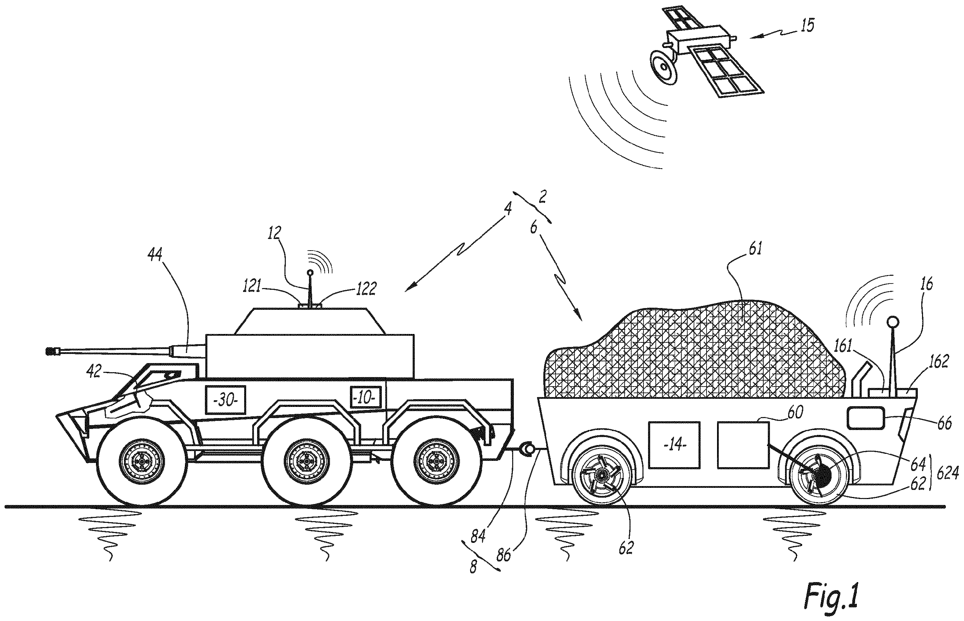

L'ensemble roulant 2 représenté à la figure 1 comprend un engin tracteur 4 et une remorque 6. La remorque 6 est attelée à l'engin tracteur 4 via un système d'attelage automatique 8, comprenant par exemple une pièce femelle 84 disposée à l'arrière de l'engin tracteur 4 et une pièce mâle 86 disposée à l'avant de la remorque 6 ainsi qu'un dispositif d'approche finale intégré au système d'attelage automatique 8. Le dispositif d'approche finale, qui peut comprendre des moyens de guidage relatif entre les pièces 84 et 86, sert notamment à gagner en précision lors de l'attelage de la remorque 6 sur l'engin tracteur 4 en automatisant l'accouplement entre la pièce femelle 84 et la pièce mâle 86.

L'engin tracteur 4 peut être destiné à contenir un équipage formé d'un ou plusieurs soldats, il peut aussi porter des systèmes d'armes, de communication ou d'observations ou transporter des charges ou des blessés. Il peut être pourvu ou non d'un poste de pilotage matérialisé sur les figures par un volant 42, visible par arrachement partiel, et de sièges, non représentés, pour le transport d'un conducteur et, le cas échéant, de passagers, membres de l'équipage de l'ensemble roulant 2. L'engin tracteur 4 est, dans l'exemple des figures, équipé d'une arme 44 de type tourelle moyen calibre.

La remorque 6 est, quant à elle, prévue pour transporter le matériel nécessaire, mais non vital, pour la réalisation la mission dans la durée et la profondeur. Il peut s'agir de matériel d'hébergement, par exemple de tentes, de réchauds ou d'installations sanitaires, de vivres ou des effets personnels des membres de l'équipage, ainsi que des dotations de munitions complémentaires ou tout autre matériel nécessaire à l'engin ou d'autres engins évoluant en concert avec celui-ci (logistique collaborative). Dans l'exemple des figures, ce matériel est disposé sous un filet 61.

Dans cet exemple, donné uniquement à titre illustratif, la remorque 6 est dimensionnée pour transporter une charge utile d'environ une tonne, le volume utile est d'environ 1 m³. Cette remorque peut être déclinée en une famille de remorques, de capacités d'emport différentes, permettant de répondre à l'ensemble des besoins de forces en projection. Cette remorque pourra être configurée sur la base d'une structure intégrant a minima un châssis, au moins une roue et son système de liaison sol, un système de freinage, un système d'attelage et un plateau de chargement équipé d'éléments de fixation rapide pour recevoir les charges transportées. Des kits intégrables à cette structure sont :
- Une partie d'un système de géolocalisation, telle qu'une cellule de géolocalisation
- Un système de communication sécurisé
- Une partie d'un système d'attelage automatique doté d'un dispositif d'approche finale
- Une motorisation de la remorque à partir d'a minima un moteur électrique
- Un système de management de l'énergie
- Un système de stockage de l'énergie
- Une unité de commande des organes de direction et de freinage et du ou des moteurs électriques
- Une unité logique de calcul de trajectoire et des capteurs associés de détection d'obstacles

La remorque est en mesure de transporter par exemple des containers étanches ou grillagés, non représentés sur les dessins, correspondant à ses caractéristiques d'emport. Dans ce cas, un plateau de chargement de la remorque 6 est équipé de systèmes d'arrimage de type « twist lock » pour brider ces containers, les systèmes d'arrimage ne sont pas représentés sur les dessins.

La remorque 6 comprend au moins une roue 62 et une unité de commande 60, ou « ECU », de l'anglais « Electronic Control Unit », pour commander au moins un moteur d'entraînement 64, la remorque 6 est également équipée d'organes de direction et de freinage commandés par l'unité de commande 60. Les organes de freinage, non représentés sur les figures, permettent de décélérer la remorque 6 et d'assurer son arrêt complet, tout particulièrement sur un terrain en pente. Autrement dit, la remorque est équipée de tout le matériel nécessaire à sa propre propulsion et à sa propre commande de trajectoire.

Le système d'attelage automatique 8 permet d'atteler et de dételer et la remorque 6 sans intervention extérieure, en particulier sans intervention humaine de la part de l'équipage embarqué dans l'engin tracteur 4 ou de la part du personnel éventuellement débarqué. Le système d'attelage automatique 8 peut être du type de celui connu de EP-A-2 042 013 ou de tout type analogue. La commande de l'attelage et du dételage de la remorque 6 est automatisée et le système d'attelage automatique 8 est doté d'un système d'approche finale. Le personnel n'a donc pas besoin de quitter l'enceinte de l'engin tracteur 4 pour effectuer les opérations d'attelage et de dételage de la remorque 6 sur le, où à partir de l'engin tracteur 4. Ainsi, le personnel embarqué ou débarqué n'est pas exposé lors des différentes manoeuvres d'attelage et de dételage de la remorque 6 sur l'engin tracteur 4.

Selon la catégorie réglementaire de la remorque, le système d'attelage automatique 8 inclut des raccords fluidiques et/ou électriques pour alimenter un système de freinage de la remorque 6, pour des indicateurs de changement de direction et d'arrêt, tels des feux de stop de la remorque 6, pour une alimentation électrique de la remorque 6 dans le cas d'un engin tracteur 4 hybride ou capable de délivrer un niveau énergétique suffisant et pour un système de contrôle commande.

L'automatisation des opérations d'attelage et de dételage permet un gain de temps et de réduire l'exposition du personnel aux risques des opérationnels, en particulier sur un théâtre d'opérations militaires. Le système d'attelage automatique 8 de la remorque 6 sur l'engin tracteur 4 permet de larguer la remorque 6 automatiquement pour rendre à l'engin tracteur 4 l'ensemble de ses qualités de manoeuvrabilité et de mobilité en zone de contact ou en zone de combat. Ainsi, la remorque 6 ne ralentit pas la mission.

Dans le cas où la remorque 6 est dételée automatiquement en zone de contact ou en zone de combat et où l'engin tracteur 4 se trouve à une distance trop importante de la remorque 6 pour pouvoir faire usage du système d'attelage automatique 8, l'ensemble roulant 2 comprend des moyens pour assurer un rapprochement entre l'engin tracteur 4 et la remorque 6, au terme de l'engagement.

A cet effet, l'ensemble roulant 2 comprend une unité logique de calcul de trajectoire 30, préférentiellement disposée sur l'engin tracteur 4, qui permet de calculer une trajectoire 32 ou un itinéraire de rapprochement entre l'engin tracteur 4 et la remorque 6. Dans la suite du texte, « itinéraire » est synonyme de « trajectoire », « itinéraire » est référencé avec la référence 32, comme « trajectoire 32 ».

L'engin tracteur 4 de l'ensemble roulant 2 comprend une première cellule de géolocalisation 10, qui fait partie d'un système de géolocalisation, et un premier dispositif de communication à distance 12.

La remorque comprend une deuxième cellule de géolocalisation, qui fait partie du même système de géolocalisation, et un deuxième dispositif de communication à distance 16.

Pour calculer la trajectoire 32 de rapprochement entre l'engin tracteur 4 et la remorque 6, des coordonnées de géolocalisation déterminées par la première cellule de géolocalisation 10, située sur l'engin tracteur 4, et par la deuxième cellule de géolocalisation 14, située sur la remorque 6, sont utilisées afin de calculer un itinéraire 32 qui indique le chemin à suivre par la remorque 6 pour rejoindre l'engin tracteur 4.

A l'inverse, un pilote de l'engin tracteur 4 peut suivre l'itinéraire 32 pour récupérer la remorque 6. En variante, l'engin tracteur 4 peut être télé-opéré par un opérateur débarqué, permettant ainsi de réduire l'exposition de l'équipage aux risques potentiels.

Les première et deuxième cellules de géolocalisation 10 et 14 fonctionnent sur la base de données GPS en faisant intervenir au moins un satellite 15 pour déterminer les coordonnées de géolocalisation. En pratique, la référence 15 représente un ensemble de satellites du système GPS ou d'un système équivalent du type Galileo.

Selon une variante, les première et deuxième cellules de géolocalisation 10 et 14 fonctionnent en se positionnant par rapport à des données fournies par le système d'informations du champ de bataille du type « BMS » de l'anglais « Battle Management System ».

Les premier et deuxième dispositifs de communications 12 et 16 comprennent respectivement un émetteur radio 121 et 161 et un récepteur radio 122 et 162 pour permettre une communication bidirectionnelle, et préférentiellement sécurisée, entre l'engin tracteur 4 et la remorque 6. Ces dispositifs 12 et 16 sont destinés à transmettre les données de géolocalisations, déterminées par les première et deuxième cellules de géolocalisation 10 et 14 grâce à l'ensemble de satellites 15, ou d'autres types d'informations, de la remorque 6 vers l'engin tracteur 4 ou inversement.

Selon une autre variante, la communication entre le premier système de géolocalisation 10 et le deuxième système de géolocalisation 14 a lieu par le système de communications tactique.

EP 3 273 201 A1 décrit une méthode de calcul d'un itinéraire pour un engin tout terrain. La méthode décrite par EP 3 273 201 A1 ou une méthode alternative peuvent être utilisées pour calculer la trajectoire 32 de rapprochement entre l'engin tracteur 4 et la remorque 6. En variante, une méthode de recherche autonome de trajectoire peut être utilisée.

La trajectoire 32 peut par exemple comprendre un ou plusieurs « waypoint » (point de cheminement ou point de virage) indiquant par exemple les endroits où un changement de cap est nécessaire pour suivre la trajectoire 32. Les « waypoints » peuvent être matérialisés par des relevés de position GPS ou par des balises radio.

Ainsi l'engin tracteur 4 peut suivre l'itinéraire 32 pour se rapprocher de la remorque 6 et la récupérer après l'intervention de l'engin tracteur 4, seul, dans le cadre d'une opération militaire. Inversement, la remorque 6 comprend des moyens pour suivre l'itinéraire 32 dans le but de rejoindre l'engin tracteur 4. Autrement dit, la remorque 6 peut suivre l'itinéraire 32 par ses propres moyens pour rejoindre l'engin tracteur 4.

En option, la remorque 6 comprend des capteurs de détection d'obstacles permettant de corriger en temps réel la trajectoire 32 dans le cas où des obstacles infranchissables pour la remorque 6 se trouvent sur l'itinéraire 32 calculé précédemment.

En variante, l'engin 4 comprend des capteurs de détection d'obstacles similaires à ceux décrits précédemment.

De préférence, le moteur d'entraînement 64 est de type électrique et peut être alimenté par une batterie 66, préférentiellement rechargeable, pour assurer l'autonomie de la remorque 6 dans la durée. La batterie 66 est ainsi assimilable à un système de stockage d'énergie et à un système de management de l'énergie embarqué à bord de la remorque 6.

De préférence, la remorque 6 est équipée de plusieurs moteurs d'entraînement 64 électriques entrainant les roues 62 de la remorque 6. Ceux-ci peuvent être intégrés aux roues 62 de la remorque pour réduire l'encombrement des moteurs d'entraînements 64 dans la remorque 6. Les roues 62 et les moteurs électriques 64 forment dans ce cas ensemble des moteurs-roues 624. Les moteurs 64, ou le cas échéant les moteurs-roues 624, sont commandés par l'unité de commande 60.

Les moteurs 64 entrainant les roues ou les moteurs-roues 624 constituent préférentiellement les organes de direction de la remorque 6, en étant actionnés de façon différenciée par l'unité de commande 60, pour assurer la propulsion et la direction de la remorque 6 et lui donner une maniabilité suffisante pour permettre de franchir un vaste panel de terrain (sableux, boueux, enneigé, rocailleux, ...). Autrement dit, les moteurs 64 entrainant les roues, ou les moteurs-roues 624 associant au moins un moteur 64 dans au moins une roue 62, constituent les organes de direction de la remorque 6.

Les moteurs 64 entrainant les roues 62 ou les moteurs-roues 624 de la remorque 6 assurent à l'ensemble roulant 2 des performances de mobilité voisines de celles de l'engin tracteur 4, seul. Les moteurs 64 entrainant les roues 62 ou les moteurs-roues 624 contribuent également au franchissement d'obstacle afin de ne pas réduire les performances de mobilité de l'engin tracteur 4. De préférence, les moteurs 64 entrainant les roues 62 ou les moteurs-roues 624 de la remorque 6 sont décrabotables au-delà d'une certaine vitesse.

Lorsque la remorque 6 est attelée à l'engin tracteur 4, par l'intermédiaire du système d'attelage automatique 8, le rechargement de la batterie 66 de la remorque 6 se fait par l'engin tracteur 4, sous réserve des énergies disponibles. En descente et lors des freinages ou des ralentissements de l'ensemble roulant 2, le rechargement de la batterie 66 peut être assuré par les moteurs d'entrainement 64 de la remorque 6. Les moteurs 64 de la remorque 6 contribuent au ralentissement de l'ensemble roulant 2 dans les phases de décélération.

Dans le cas où la remorque 6 est dételée de l'engin tracteur 4 et où la remorque 6 et l'engin tracteur 4 sont trop éloignés l'un de l'autre suite à une obligation d'engagement sur le terrain, plusieurs méthodes de rapatriement de l'engin tracteur 4 et de la remorque 6 sont envisageables afin de recomposer l'ensemble roulant 2. La récupération de la remorque peut être réalisée :
- Soit par l'engin tracteur 4 qui rejoint la remorque 6 :
   ∘ Via le pilotage du conducteur s'il y en a un à bord de l'engin 4
   ∘ Ou via la télé opération de l'engin 4 par un opérateur débarqué permettant de réduire l'exposition du personnel aux risques
   ∘ Ou d'une façon totalement autonome via le pilotage réalisé par l'unité logique 30 embarquée à bord de l'engin 4:
      ▪ Qui réalise le calcul de trajectoire 32 à partir des coordonnées de géolocalisation de l'engin 4 et de la remorque 6 : suivi de « waypoints » ou recherche autonome d'itinéraire 32
      ▪ Qui donne les consignes de pilotage à une unité de commande qui actionne des organes de direction, de freinage et des moteurs non représentés de l'engin 4
      ▪ Qui corrige en temps réel la trajectoire 32 de l'engin 4 en fonction des obstacles détectés par les capteurs embarqués à bord de l'engin 4 et présents sur l'itinéraire 32.
      Dans la mesure où un équipage est présent à bord de l'engin 4, cet équipage peut être affecté à d'autres tâches que celle de récupération de la remorque 6.
- Soit par la remorque 6 qui rejoint l'engin tracteur 4:
   ∘ Via la télé opération de la remorque 6 par un opérateur embarqué dans l'engin 4
   ∘ Ou via la télé opération de la remorque 6 par un opérateur débarqué de l'engin 4 permettant de réduire l'exposition aux risques de celui ci
   ∘ Ou d'une façon totalement autonome via le pilotage réalisé par l'unité logique de calcul de trajectoire 30 embarquée à bord de la remorque 6 ou de l'engin 4:
      ▪ Qui réalise le calcul de trajectoire 32 à partir des coordonnées de géolocalisation de l'engin 4 et de la remorque 6: suivi de « waypoints » ou recherche autonome d'itinéraire 32
      ▪ Qui donne les consignes de pilotage à l'unité de commande 60 qui actionne les organes de direction, de freinage et les moteurs 64 ou moteurs-roues 624 de la remorque 6
      ▪ Qui corrige en temps réel la trajectoire 32 de la remorque en fonction des obstacles détectés par les capteurs embarqués à bord de la remorque 6 et présents sur l'itinéraire 32.

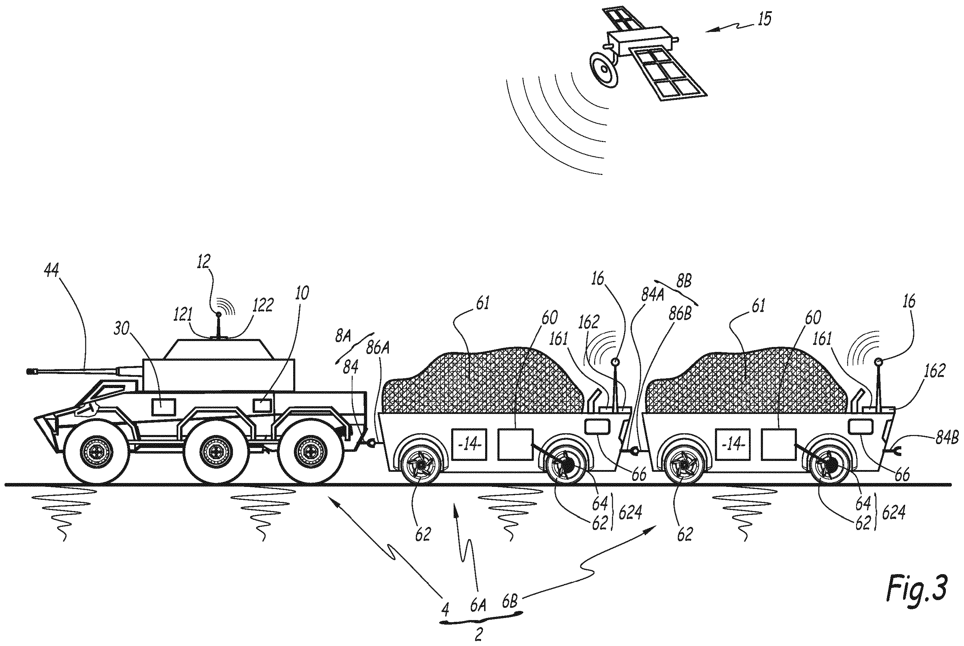

Dans la configuration illustrée sur la figure 3, l'ensemble roulant 2 comprend un engin tracteur 4 et deux remorques 6A et 6B attelées entre elles à l'aide de leurs systèmes d'attelage automatique 8A et 8B respectifs. Dans cette configuration, chaque remorque comprend une pièce mâle 86A, respectivement 86B, de son système d'attelage automatique 8A, respectivement 8B, à l'avant, et une pièce femelle 84A, respectivement 84B, de son système d'attelage automatique 8A, respectivement 8B, à l'arrière.

Lorsque plusieurs remorques 6 sont dételées, les coordonnées de géolocalisation indiquant la position de chaque remorque 6 peuvent être des « waypoint » de la trajectoire 32 calculée par l'unité logique de calcul de trajectoire 30. S'il y a par exemple deux remorques 6A et 6B dételées avec deux positions distinctes l'une de l'autre, matérialisées par des coordonnées de géolocalisation différentes pour la remorque 6A et pour la remorque 6B, la remorque 6A peut suivre seule une première partie de l'itinéraire 32 jusqu'à ce qu'elle arrive au « waypoint » matérialisé par les coordonnées de géolocalisation indiquant la position de la deuxième remorque 6B. Les deux remorques 6A et 6B peuvent s'atteler l'une à l'autre par l'intermédiaire du système d'attelage automatique 8B. Elles suivent ensuite ensemble, c'est-à-dire attelées l'une à l'autre, une deuxième partie de l'itinéraire 32 jusqu'à ce qu'elles rejoignent l'engin tracteur 2. La remorque 6A est alors attelée à l'engin tracteur 4 par l'intermédiaire de système d'attelage automatique 8A.

L'ordre d'attelage des remorques 6A et 6B n'est pas important. Autrement dit, dans l'exemple considéré ici, la remorque 6A étant équipée de sa pièce mâle 86A à l'avant et de sa pièce femelle 84A à l'arrière et la remorque 6B étant équipée de sa pièce mâle 86B à l'avant et de sa pièce femelle 84B à l'arrière, la remorque 6B peut être attelée à l'arrière de la remorque 6A en raccordant la pièce femelle 84A à la pièce mâle 86B. Inversement, la remorque 6A peut être attelée à l'arrière de la remorque 6B en raccordant la pièce femelle 84B à la pièce mâle 86A.

En variante, il peut y avoir un nombre différent de deux remorques 6, l'itinéraire 32 comprend alors au moins autant de « waypoint » qu'il y a de remorques 6 à récupérer. Toutes les remorques 6 peuvent s'atteler entre elles grâce à leur système d'attelage automatique 8 respectif.

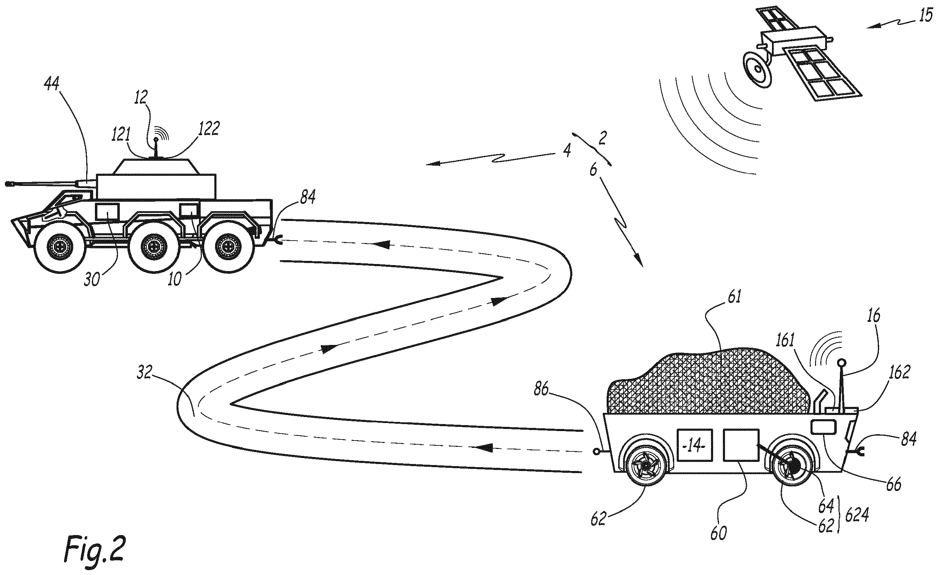

En variante de la configuration représentée aux figures 1 et 2, la pièce femelle 84 du système d'attelage automatique 8 peut se situer à l'avant de la remorque 6 et la pièce mâle 86 du système d'attelage 8 peut se situer à l'arrière de l'engin tracteur 4.

Dans le cas où l'ensemble roulant 2 comprend plusieurs remorques, comme dans la configuration représentée à la figure 3, les systèmes d'attelage 8 doivent tous être identiques d'une remorque à l'autre. Autrement dit, si une remorque 6 de l'ensemble roulant 2 comporte la pièce mâle 86 de son système d'attelage 8 à l'avant, les pièces mâles 86 respectives de toutes les autres remorques 6 de l'ensemble roulant 2 sont également disposées à l'avant de chaque remorque 6. La même logique s'applique pour les pièces femelles 84 des systèmes d'attelage respectif 8 de l'ensemble des remorques 6.

En variante, la pièce mâle 86 peut se trouver à l'arrière de chaque remorque 6 et la pièce femelle 84 à l'avant de chaque remorque 6; la configuration doit être la même pour toutes les remorques 6 de l'ensemble roulant 2 pour que les remorques puissent être attelées entre elles.

En variante, la remorque 6 peut comprendre par exemple au moins une roue 62 avant et deux roues 62 arrière. Les moteurs d'entraînement 64 se situent uniquement dans les roues 62 arrières de la remorque 6, en particulier les moteurs 64 entrainant les roues 62 ou les moteurs-roues 624 se situent uniquement à l'arrière de la remorque 6. Selon une variante non représentée, chaque roue 62 avant peut évoluer entre une configuration « position au sol » et une configuration « position relevée ». Ainsi, lorsque la remorque 6 est attelée à l'engin tracteur 4 par l'intermédiaire du système d'attelage automatique 8 et tractée par l'engin tracteur 4, chaque roue avant est dans la configuration « position relevée », la remorque 6 ne repose alors que sur les roues 62 arrière.

Lorsque la remorque 6 se déplace par ses propres moyens, c'est-à-dire propulsée par les moteurs 64 entrainant les roues 62 ou les moteurs-roues 624 situés à l'arrière de la remorque 6, la roue avant 62 de la remorque 6 est configuration « position au sol », la remorque 6 repose ainsi sur les deux roues 62 arrière et sur chaque roue 62 avant.

Dans la suite du texte, les valeurs ne sont données qu'à titre indicatif. La vitesse maximum de l'ensemble roulant 2, dans la configuration où la roue 62 avant de la remorque 6 est en « position relevée » et où la remorque 6 est tractée par l'engin tracteur 4, est par exemple de 110 km/h. Les performances de franchissement de l'ensemble roulant 2 sont de 50% en pente et 30% en dévers. La hauteur de marche maximale que peut franchir l'ensemble roulant 2 est de 400 mm et la profondeur de gué maximale que peut franchir l'ensemble roulant 2 est de 900 mm. En d'autres termes, les capacités de franchissement de l'ensemble roulant 2 en termes de vitesse et de franchissement d'obstacle sont équivalentes à celle de l'engin tracteur 4 seul.

Lorsque la remorque 6 est dételée de l'engin tracteur 4 et que la remorque 6 progresse seule, donc par ses propres moyens, sur le terrain, sa vitesse maximale est de 20 km/h et ses performances de franchissement s'élèvent à 30 % en pente et 20 % en dévers. La profondeur de gué maximale que peut franchir la remorque 6 seule est de 900 mm.

En variante, l'unité logique 30 de calcul de trajectoire 32 peut être disposée sur la remorque 6, ou sur l'une des remorques 6A, 6B,... si l'ensemble roulant 2 comprend plusieurs remorques. Selon une autre variante, la fonction de l'unité logique 30 de l'exemple peut être réalisée par plusieurs unités logiques réparties dans l'ensemble roulant 2.

En variante, le moteur 64 de la remorque 6 peut être de type hydraulique, à combustion interne ou alimenté par une pile à hydrogène.

En variante, les organes de direction de la remorque 6 peuvent comprendre une crémaillère.

Toute caractéristique de l'un des modes de réalisation ou variante décrite ci-dessus peut être mise en œuvre dans les autres modes de réalisation et variantes décrits.

## Revendications

1. Ensemble roulant (2) comportant un engin tracteur (4), au moins une remorque (6) et un système d'attelage automatique (8) de la remorque (6) sur l'engin tracteur (4),
- l'engin tracteur (4) est équipé d'une première cellule de géolocalisation (10) et d'un premier dispositif de communication à distance (12)
- la remorque (6) est équipée d'une deuxième cellule de géolocalisation (14), d'un deuxième dispositif de communication à distance (16), d'organes de direction et de freinage et d'au moins un moteur d'entrainement (64) d'au moins une roue (62) de la remorque (6)
- l'ensemble roulant (2) comprend au moins une unité logique (30) de calcul de trajectoire de rapprochement (32) entre l'engin tracteur (4) et la remorque (6), en fonction de coordonnées de géolocalisation déterminées par les première et deuxième cellules de géolocalisation (10, 14) et transmises par les premier et/ou deuxième dispositifs de communication (12, 16)
ledit ensemble roulant est **caractérisé en ce que**
- la remorque (6) est équipée d'une unité de commande (60) des organes de direction et de freinage et du moteur d'entrainement (64), en fonction de la trajectoire de rapprochement (32) calculée par l'unité logique (30).

2. Ensemble roulant selon la revendication 1, **caractérisé en ce que** le moteur d'entrainement (64) de la remorque (6) est de type électrique et **en ce que** la remorque (6) est équipée d'une batterie (66), de préférence rechargeable, pour l'alimentation du moteur électrique (64).

3. Ensemble roulant selon la revendication 2, **caractérisée en ce que** la remorque (6) est équipée de plusieurs moteurs électriques (64) entrainant les roues (62) ou intégrés à des roues (62) de la remorque (6), avec lesquelles ils forment des moteurs-roues (624).

4. Ensemble roulant selon la revendication 3, **caractérisé en ce que** les roues (62) ou les moteurs-roues (624) constituent les organes de direction de la remorque (6).

5. Ensemble roulant selon l'une des revendications 3 ou 4, **caractérisé en ce que** les moteurs entrainant les roues (62) ou les moteurs-roues (624) de la remorque sont décrabotables.

6. Ensemble roulant selon l'une quelconque des revendications précédentes, **caractérisé en ce que** les premier et deuxième dispositifs de communication à distance (12, 16) intègrent des émetteurs (121, 161) et récepteurs radios (122, 162).

7. Ensemble roulant selon l'une quelconque des revendications précédentes, **caractérisé en ce que** les première et deuxième cellules de géolocalisation (10, 14) fonctionnent sur la base de données GPS ou selon des données issues d'un système d'informations du champ de bataille.

8. Ensemble roulant selon l'une quelconque des revendications précédentes, **caractérisé en ce que** l'unité logique (30) est disposée sur l'engin tracteur (4).

9. Ensemble roulant selon l'une quelconque des revendications 1 à 7, **caractérisé en ce que** l'unité logique (30) est disposée sur la remorque (6).

10. Ensemble roulant selon l'une quelconque des revendications précédentes, **caractérisé en ce que** l'ensemble roulant (2) comprend au moins deux remorques (6A, 6B) attelées entre elles, ces remorques (6A, 6B) étant chacune équipées d'une deuxième cellule de géolocalisation (14), d'un deuxième dispositif de communication à distance (16), d'organes de direction et de freinage, d'au moins un moteur d'entrainement (64) d'au moins une roue (62) de chaque remorque (6A, 6B) et d'une unité de commande (60) des organes de direction et de freinage et du moteur d'entrainement (64), en fonction de la trajectoire de rapprochement (32) calculée par l'unité logique (30).

## Patentansprüche

1. Rollende Anordnung (2) mit einer Zugmaschine (4), mindestens einem Anhänger (6) und einem System (8) zum automatischen Ankuppeln des Anhängers (6) an die Zugmaschine (4),
- die Zugmaschine (4) ist mit einer ersten Geolokalisierungszelle (10) und einer ersten Fernkommunikationsvorrichtung (12) ausgerüstet,
- der Anhänger (6) ist mit einer zweiten Geolokalisierungszelle (14), einer zweiten Fernkommunikationsvorrichtung (16), Richtungs- und Bremselementen und mindestens einem Antriebsmotor (64) für mindestens ein Rad (62) des Anhängers (6) ausgerüstet,
- die rollende Anordnung (2) umfasst mindestens eine Logikeinheit (30) zur Berechnung der Annäherungsbahn (32) zwischen der Zugmaschine (4) und dem Anhänger (6) in Abhängigkeit von Geolokalisierungskoordinaten, die von der ersten und der zweiten Geolokalisierungszelle (10, 14) bestimmt und von der ersten und/oder der zweiten Kommunikationsvorrichtung (12, 16) übertragen werden, wobei die rollende Anordnung **dadurch gekennzeichnet ist, dass**
- der Anhänger (6) mit einer Einheit (60) zur Steuerung der Richtungs- und Bremselemente und des Antriebsmotors (64) in Abhängigkeit von der durch die Logikeinheit (30) berechneten Annäherungsbahn (32) ausgerüstet ist.

2. Rollende Anordnung nach Anspruch 1, **dadurch gekennzeichnet, dass** der Antriebsmotor (64) des Anhängers (6) ein elektrischer ist und dass der Anhänger (6) mit einer vorzugsweise wiederaufladbaren Batterie (66) zur Versorgung des Elektromotors (64) ausgestattet ist.

3. Rollende Anordnung nach Anspruch 2, **dadurch gekennzeichnet, dass** der Anhänger (6) mit mehreren Elektromotoren (64) ausgestattet ist, die die Räder (62) antreiben oder in die Räder (62) des Anhängers (6) integriert sind, mit denen sie Radmotoren (624) bilden.

4. Rollende Anordnung nach Anspruch 3, **dadurch gekennzeichnet, dass** die Räder (62) oder Radmotoren (624) die Richtungselemente des Anhängers (6) bilden.

5. Rollende Anordnung nach einem der Ansprüche 3 oder 4, **dadurch gekennzeichnet, dass** die Motoren, die die Räder (62) oder die Radmotoren (624) des Anhängers antreiben, auskuppelbar sind.

6. Rollende Anordnung nach einem der vorhergehenden Ansprüche, **dadurch gekennzeichnet, dass** die erste und die zweite Fernkommunikationsvorrichtung (12, 16) Funksender (121, 161) und -empfänger (122, 162) umfassen.

7. Rollende Anordnung nach einem beliebigen der vorhergehenden Ansprüche, **dadurch gekennzeichnet, dass** die erste und die zweite Geolokalisierungszelle (10, 14) auf der Grundlage von GPS-Daten oder Daten aus einem Gefechtsfeldinformationssystem arbeiten.

8. Rollende Anordnung nach einem beliebigen der vorhergehenden Ansprüche, **dadurch gekennzeichnet, dass** die Logikeinheit (30) an der Zugmaschine (4) angeordnet ist.

9. Rollende Anordnung nach einem beliebigen der Ansprüche 1 bis 7, **dadurch gekennzeichnet, dass** die Logikeinheit (30) an dem Anhänger (6) angeordnet ist.

10. Rollende Anordnung nach einem beliebigen der vorhergehenden Ansprüche, **dadurch gekennzeichnet, dass** die rollende Anordnung (2) mindestens zwei miteinander gekoppelte Anhänger (6A, 6B) umfasst, wobei diese Anhänger (6A, 6B) jeweils mit einer zweiten Geolokalisierungszelle (14), einer zweiten Fernkommunikationsvorrichtung (16), Richtungs- und Bremselementen, mindestens einem Antriebsmotor (64) für mindestens ein Rad (62) jedes Anhängers (6A, 6B) und einer Einheit (60) zur Steuerung der Richtungs- und Bremselemente und des Antriebsmotors (64) in Abhängigkeit von der durch die Logikeinheit (30) berechneten Annäherungsbahn (32) ausgerüstet sind.

## Claims

1. Rolling assembly (2) comprising a towing vehicle (4), at least one trailer (6) and an automatic system (8) for coupling the trailer (6) on the towing vehicle (4),
- the towing vehicle (4) is equipped with a first geolocation cell (10) and with a first device (12) for remote communication,
- the trailer (6) is equipped with a second geolocation cell (14), with a second device (16) for remote communication, with elements for steering and braking, and with at least one motor (64) for actuation of at least one wheel (62) of the trailer (6),
- the rolling assembly (2) comprises at least one logic unit (30) for calculation of the approach trajectory (32) between the towing vehicle (4) and the trailer (6), as a function of geolocation coordinates determined by the first and second geolocation cells (10, 14) and transmitted by the first and/or second communication devices (12, 16),
said rolling assembly is **characterised in that**
- the trailer (6) is equipped with a unit (60) for controlling the steering and braking elements and the actuation motor (64), as a function of the approach trajectory (32) calculated by the logic unit (30).

2. Rolling assembly according to claim 1, **characterised in that** the actuation motor (64) of the trailer (6) is of the electric type, and **in that** the trailer (6) is equipped with a battery (66), preferably rechargeable, for supplying the electric motor (64).

3. Rolling assembly according to claim 2, **characterised in that** the trailer (6) is equipped with several electric motors (64) actuating the wheels (62) or integrated in the wheels (62) of the trailer (6), with which they form motorised wheels (624).

4. Rolling assembly according to claim 3, **characterised in that** the wheels (62) or the motorised wheels (624) constitute the steering elements of the trailer (6).

5. Rolling assembly according to one of claims 3 or 4, **characterised in that** the motors actuating the wheels (62) or the motorised wheels (624) of the trailer are disconnectable.

6. Rolling assembly according to any of the preceding claims, **characterised in that** the first and second devices (12, 16) for remote communication integrate radio transmitters (121, 161) and receivers (122, 162).

7. Rolling assembly according to any of the preceding claims, **characterised in that** the first and second geolocation cells (10, 14) function on the basis of GPS data or according to data issued by a system for information from the battlefield.

8. Rolling assembly according to any of the preceding claims, **characterised in that** the logic unit (30) is disposed on the towing vehicle (4).

9. Rolling assembly according to any of claims 1 to 7, **characterised in that** the logic unit (30) is disposed on the trailer (6).

10. Rolling assembly according to any of the preceding claims, **characterised in that** the rolling assembly (2) comprises at least two trailers (6A, 6B) coupled together, these trailers (6A, 6B) each being equipped with a second geolocation cell (14), with a second device (16) for remote communication, with steering and braking elements, with at least one motor (64) for actuation of at least one wheel (62) of each trailer (6A, 6B), and with a unit (60) for controlling the steering and braking elements and the actuation motor (64) as a function of the approach trajectory (32) calculated by the logic unit (30).
